# EUROPEAN PATENT SPECIFICATION

(11) **EP 4 462 561 B1**
(45) Date of publication and mention of the grant of the patent: **05.03.2025**
(21) Application number: 24164037.4
(22) Date of filing: 18.03.2024
(51) Int. Cl.: H01M 50/209, H01M 50/211, H01M 50/507, H01M 50/55, H01M 50/553

(54) **POWER STORAGE CELL AND POWER STORAGE MODULE**
STROMSPEICHERZELLE UND STROMSPEICHERMODUL
CELLULE DE STOCKAGE D'ÉNERGIE ET MODULE DE STOCKAGE D'ÉNERGIE

(30) Priority: 12.05.2023 JP 2023079065
(43) Date of publication of application: 13.11.2024
(73) Proprietor: TOYOTA JIDOSHA KABUSHIKI KAISHA, Toyota-shi, Aichi-ken, 471-8571 (JP)
(72) Inventor: SHIMURA, Yosuke, Toyota-shi, 471-8571 (JP); OBAYASHI, Yoshiro, Toyota-shi, 471-8571 (JP); YAMANAKA, Atsushi, Toyota-shi, 471-8571 (JP); CHIHARA, Masashi, Toyota-shi, 471-8571 (JP); SUGIE, Kazuki, Toyota-shi, 471-8571 (JP); YONEKAWA, Kosuke, Toyota-shi, 471-8571 (JP); HIRAO, Yasuhiro, Toyota-shi, 471-8571 (JP)
(74) Representative: J A Kemp LLP

(56) References cited:
- EP-A1- 2 654 099
- CN-A- 103 840 190
- CN-A- 104 466 220
- US-A1- 2016 372 793

## Description

### BACKGROUND

### Field

The present disclosure relates to a power storage cell and a power storage module.

### Description of the Background Art

Conventionally, US Patent Application Publication No. 2016/0372793 discloses a rechargeable battery. The rechargeable battery includes an electrode assembly, a case, a cap plate, a first sub-terminal, and a second sub-terminal. The cap plate seals an opening of the case. The first sub-terminal is arranged on one end of the cap plate, and extends adjacent to an outer surface of the case. The second sub-terminal is on the other end of the cap plate, and extends adjacent to another outer surface of the case.

### SUMMARY

In the rechargeable battery (i.e., the power storage cell) disclosed in US Patent Application Publication No. 2016/0372793, in order to reduce the height of the power storage module, the external terminals (i.e., the sub-terminals) of adjacent power storage cells are electrically connected to each other by a bus bar or the like on a side surface of the case. However, it is not easy to arrange the bus bar or the like with respect to the external terminal on the side surface of the case EP2654099A1 discloses a battery module with a plurality of cells wherein the external terminal is disposed on a side surface of the case, and a recessed section id formed on a side surface adjacent to the side surface provided with the external terminal.

The present disclosure has been accomplished in view of the aforementioned problem, and it is therefore an object of the present disclosure to provide a power storage cell and a power storage module which allows an easy arrangement of a component such as a bus bar for connecting power storage cells to each other.

The power storage cell according to the present invention is given in the claims and includes an electrode assembly, a cell case, and an external terminal. The cell case houses an electrode assembly. The external terminal is fixed to the cell case. The external terminal includes a first terminal portion and a second terminal portion. The first terminal portion is arranged above the cell case. The second terminal portion extends from the first terminal portion along the side surface of the cell case. The second terminal portion is provided with a recess. The recess is formed on a surface of the second terminal portion opposite to the other surface thereof that faces the cell case.

A power storage module according to an embodiment of the present invention is also given in the claims and includes two or more power storage cells, a band, and a bus bar. The two or more power storage cells are arranged side by side in the lateral direction. The band surrounds the two or more power storage cells. The bus bar is disposed in the recess of a first power storage cell which is one of the two or more power storage cells and in the recess of a second power storage cell which is another one of the two or more power storage cells and is adjacent to the first power storage cell. The bus bar is provided on a surface of the band that faces the power storage cell.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view schematically illustrating a power storage module according to an embodiment of the present disclosure;
Fig. 2 is another perspective view schematically illustrating a power storage module according to an embodiment of the present disclosure;
Fig. 3 is a perspective view schematically illustrating a power storage cell according to an embodiment of the present disclosure;
Fig. 4 is a cross-sectional view of the power storage module taken along line IV-IV in Fig. 1;
Fig. 5 is a cross-sectional view of an electrode assembly taken along line V-V in Fig. 4; and
Fig. 6 is a perspective view schematically illustrating a step of attaching a band to a plurality of power storage cells.

### DESCRIPTION OF THE PREFERRED EMBODIMENTS

Embodiments of the present invention will be described with reference to the drawings. In the following drawings, the same or corresponding members are denoted by the same reference numerals.

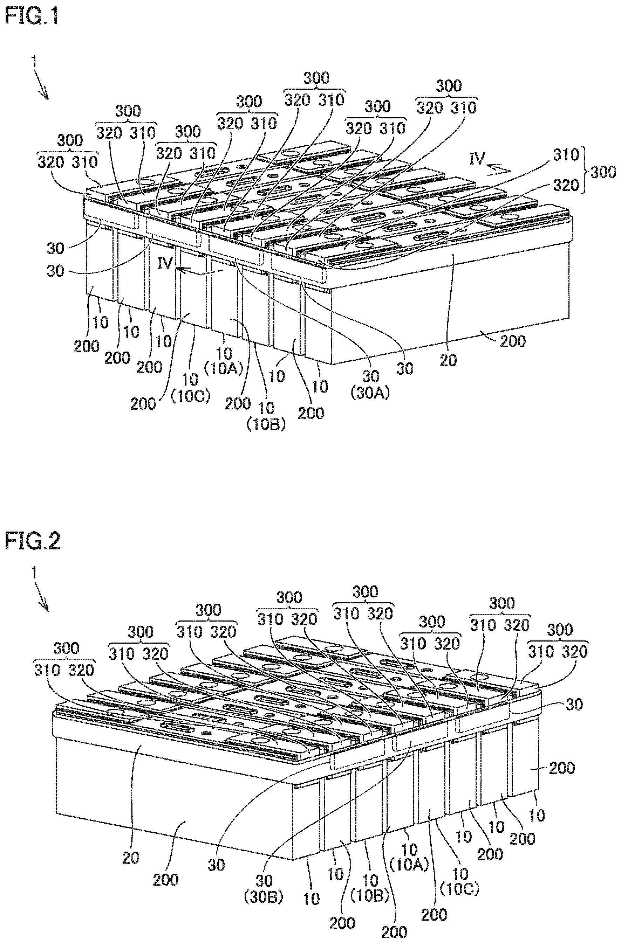

Fig. 1 is a perspective view schematically illustrating a power storage module 1 according to an embodiment of the present disclosure. Fig. 2 is another perspective view schematically illustrating the power storage module 1 according to the embodiment of the present disclosure. As illustrated in Figs. 1 and 2, the power storage module 1 according to an embodiment of the present disclosure includes two or more power storage cells 10, a band 20, and one or more bus bars 30.

The two or more power storage cells 10 are arranged side by side in the lateral direction. Specifically, two or more power storage cells 10 are arranged side by side in the thickness direction of the power storage cell 10. A spacer (not illustrated) may be disposed between a pair of power storage cells 10 adjacent to each other.

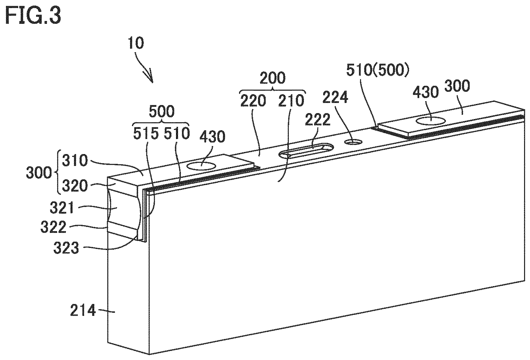

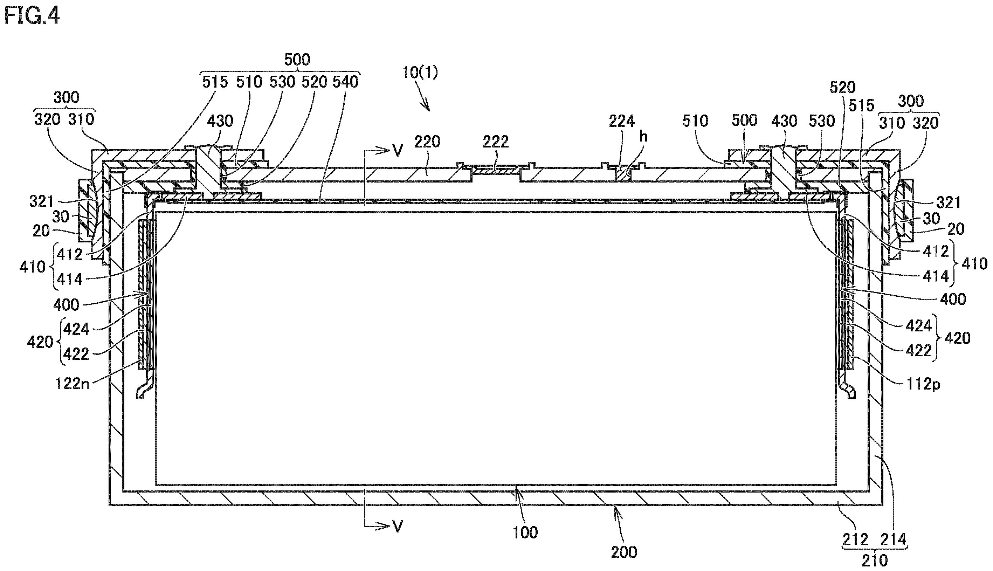

First, the configuration of the power storage cell 10 will be described in detail. Fig. 3 is a perspective view schematically illustrating the power storage cell according to an embodiment of the present disclosure. Fig. 4 is a cross-sectional view of the power storage module taken along line IV-IV in Fig. 1.

As illustrated in Figs. 3 and 4, the power storage cell 10 includes an electrode assembly 100, a cell case 200, a pair of external terminals 300, a pair of connecting members 400, and an insulating member 500.

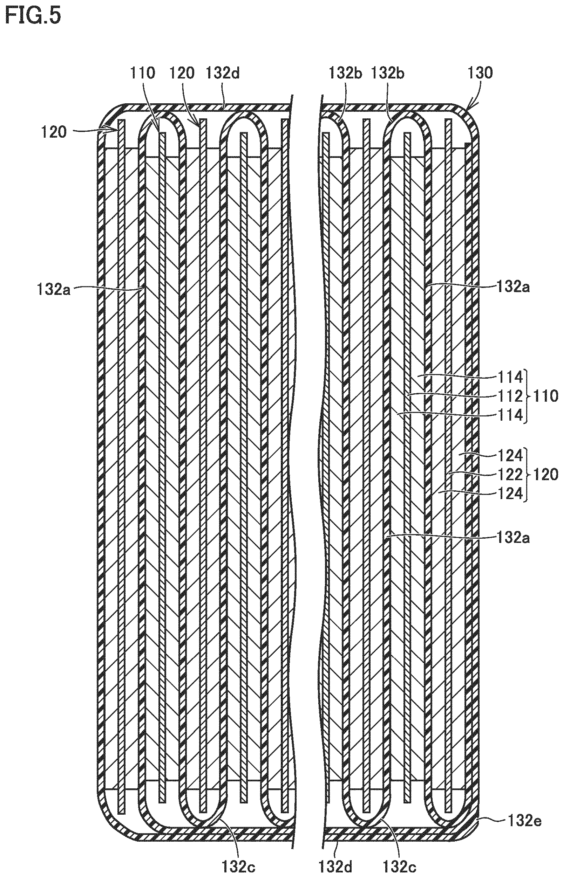

Fig. 5 is a cross-sectional view of the electrode assembly taken along line V-V in Fig. 4. As illustrated in Fig. 5, the electrode assembly 100 includes a plurality of electrodes 110 and 120, and a separator 130.

As illustrated in Fig. 5, the plurality of electrodes 110 and 120 are arranged side by side in one direction (the lateral direction in Fig. 5). The plurality of electrodes 110 and 120 include a plurality of positive electrodes 110 and a plurality of negative electrodes 120.

Each positive electrode 110 is formed in a rectangular shape elongated in a width direction (a direction orthogonal to both the one direction and the vertical direction). Each positive electrode 110 includes a positive electrode collector foil 112 and a positive electrode active material layer 114 provided on both surfaces of the positive electrode collector foil 112. The positive electrode collector foil 112 includes a positive electrode tab 112p (see Fig. 4) on which the positive electrode active material layer 114 is not provided. The positive electrode tab 112p protrudes toward one side of the width direction (a direction orthogonal to the paper surface of Fig. 5).

Each negative electrode 120 is formed in a rectangular shape elongated in the width direction. Each negative electrode 120 includes a negative electrode collector foil 122 and a negative electrode active material layer 124 provided on both surfaces of the negative electrode collector foil 122. As illustrated in Fig. 4, the negative electrode collector foil 122 includes a negative electrode tab 122n (see Fig. 4) on which the negative electrode active material layer 124 is not provided. The negative electrode tab 122n protrudes toward the other side of the width direction.

The separator 130 insulates the positive electrode 110 and the negative electrode 120 from each other. The separator 130 is made of an insulating material, and has minute voids that allow ions to pass through. As illustrated in Fig. 5, the separator 130 is formed in a zigzag shape.

The separator 130 has a rectangular shape before being formed in a zigzag shape. The separator 130 is formed in a zigzag shape and is arranged between the electrodes 110 and 120. The separator 130 includes a plurality of intervening portions 132a, a plurality of upper folded portions 132b, a plurality of lower folded portions 132c, and an outermost covering portioning portion 132d.

Each intervening portion 132a is interposed between a pair of electrodes 110 and 120 adjacent to each other in the one direction. In other words, each intervening portion 132a functions to insulate the positive electrode 110 and the negative electrode 120 from each other. Each intervening portion 132a is formed in a rectangular shape.

Each upper folded portion 132b connects an upper end of one intervening portion 132a of the plurality of intervening portions 132a to an upper end of another intervening portion 132a of the plurality of intervening portions 132a which is adjacent to the one intervening portion 132a on one side of the one direction. In the present embodiment, the upper folded portion 132b is disposed above the positive electrode 110.

Each lower folded portion 132c connects a lower end of one intervening portion 132a of the plurality of intervening portions 132a to a lower end of another intervening portion 132a of the plurality of intervening portions 132a which is adjacent to the one intervening portion 132a on the other side of the one direction. In the present embodiment, the lower folded portion 132c is disposed below the negative electrode 120. In other words, the negative electrode 120 is disposed above the lower folded portion 132c.

The outermost covering portioning portion 132d collectively covers each upper folded portion 132b and each lower folded portion 132c. More specifically, the outermost covering portioning portion 132d collectively covers all of the electrodes 110 and 120, all of the intervening portions 132a, all of the upper folded portions 132b and all of the lower folded portions 132c while being wound around a central axis parallel to the width direction. A terminal end 132e of the outermost covering portioning portion 132d is configured not to overlap with the positive electrode active material layer 114 and the negative electrode active material layer 124 in the one direction. In the present embodiment, the terminal end 132e of the outermost covering portioning portion 132d is provided below each of the electrodes 110 and 120. The peripheral surface and bottom surface of the plurality of electrodes 110 and 120 and the separator 130 are covered with an insulating film (not illustrated).

As illustrated in Figs. 3 and 4, the cell case 200 houses the electrode assembly 100. The cell case 200 contains an electrolytic solution (not illustrated). The cell case 200 is sealed. The cell case 200 includes a case body 210 and a lid 220.

The case body 210 has an opening that opens upward. The case body 210 is made of a metal such as aluminum. The case body 210 includes a bottom wall 212 and a peripheral wall 214. The bottom wall 212 is formed in a rectangular flat plate shape. The peripheral wall 214 rises from the bottom wall 212. The peripheral wall 214 is formed in a quadrangular cylindrical shape. The length of the peripheral wall 214 in the width direction is longer than the length of the peripheral wall 214 in the thickness direction. The length of the peripheral wall 214 in the height direction is longer than the length of the peripheral wall 214 in the thickness direction.

The lid 220 closes the opening of the case body 210. The lid 220 is connected to the opening by welding or the like. The lid 220 is formed in a flat plate shape. The lid 220 is made of a metal such as aluminum. The lid 220 includes a pressure release valve 222 and a sealing member 224.

The pressure release valve 222 is formed at a central portion of the lid 220. The pressure release valve 222 is configured to break when the internal pressure of the cell case 200 becomes equal to or higher than a predetermined pressure. When the pressure release valve 222 is broken, the gas in the cell case 200 is released to the outside of the cell case 200 through the pressure release valve 222, which reduces the internal pressure of the cell case 200.

The sealing member 224 seals a liquid injection port h formed in the lid 220. The liquid injection port h is a through hole for injecting an electrolytic solution into the cell case 200 in the manufacturing process of the power storage cell 10. After the electrolytic solution is injected into the case body 210 through the liquid injection port h, the liquid injection port h is sealed by the sealing member 224.

The pair of external terminals 300 is fixed to the cell case 200. One of the pair of external terminals 300 is a positive external terminal, and the other is a negative external terminal. Each external terminal 300 is fixed to an upper surface of the lid 220 via an upper insulating portion 510 which will be described later. Each external terminal 300 is made of a metal such as aluminum.

Each external terminal 300 includes a first terminal portion 310 and a second terminal portion 320. The first terminal portion 310 is arranged above the cell case 200. More specifically, the first terminal portion 310 is fixed to the upper surface of the lid 220 via the upper insulating portion 510. The first terminal portion 310 is formed, for example, in a rectangular parallelepiped shape.

The second terminal portion 320 extends from the first terminal portion 310 along a side surface of the cell case 200. More specifically, the second terminal portion 320 extends along the peripheral wall 214 in the thickness direction of the case body 210.

The second terminal portion 320 is provided with a recess 321. The recess 321 is formed on a surface of the second terminal portion 320 opposite to the other surface thereof that faces the cell case 200 (the case body 210). The recess 321 extends from one end edge 322 to the other end edge 323 in the lateral direction of the second terminal portion 320 when viewed from the direction (i.e., the width direction) in which the second terminal portion 320 and the cell case 200 (the case body 210) are arranged in line (see Fig. 3).

The pair of connecting members 400 connects a plurality of electrode tabs 112p and a plurality of electrode tabs 122n to the pair of external terminals 300, respectively. More specifically, one of the pair of connecting members 400 connects the plurality of positive electrode tabs 112p to the positive external terminal300, and the other connecting member 400 connects the plurality of negative electrode tabs 122n to the negative external terminal 300. Since the pair of connecting members 400 have substantially the same structure, only one connecting member 400 will be described below.

The connecting member 400 includes a collector tab 410, a subtab 420, and a connecting pin 430.

The collector tab 410 has a side portion 412 and an upper portion 414. The side portion 412 is arranged on a side surface of the electrode assembly 100 in the width direction. The upper portion 414 is arranged above an upper surface of the electrode assembly 100. The upper portion 414 extends inward in the width direction from an upper end of the side portion 412.

The subtab 420 connects the plurality of positive electrode tabs 112p to the collector tab 410. One end 422 of the subtab 420 is connected to the plurality of positive electrode tabs 112p by welding or the like, and the other end 424 of the subtab 420 is connected to the side portion 412 of the collector tab 410 by welding or the like.

The connecting pin 430 connects the collector tab 410 to the first terminal portion 310 of the external terminal 300. The connecting pin 430 connects the upper portion 414 to the first terminal portion 310 of the external terminal 300. Specifically, the lower end of the connecting pin 430 is inserted into a through hole provided on the upper portion 414 and is connected to the upper portion 414 by welding or the like, and the upper end of the connecting pin 430 is inserted into a through hole provided on the first terminal portion 310 of the external terminal 300 and is connected to the external terminal 300 by welding, caulking or the like.

The insulating member 500 insulates the cell case 200 and the connecting member 400 from each other. The insulating member 500 includes an upper insulating portion 510, a lateral insulating portion 515, a lower insulating portion 520, an insulating cylinder 530, and an insulating plate 540.

The upper insulating portion 510 is fixed to the upper surface of the lid 220. The upper insulating portion 510 is disposed between the lid 220 and the first terminal portion 310 of the external terminal 300. The upper insulating portion 510 is provided with an insertion hole through which the connecting pin 430 is inserted.

The lateral insulating portion 515 is disposed on the peripheral wall 214 of the case body 210. The lateral insulating portion 515 extends downward from the upper insulating portion 510. The lateral insulating portion 515 is disposed between the peripheral wall 214 of the case body 210 and the second terminal portion 320 of the external terminal 300.

The lower insulating portion 520 is fixed to the lower surface of the lid 220. The lower insulating portion 520 is disposed between the lid 220, and the upper portion 414 and a lower portion of the connecting pin 430. The lower insulating portion 520 is provided with an insertion hole through which the connecting pin 430 is inserted.

The insulating cylinder 530 is disposed between the connecting pin 430 and the lid 220. The insulating cylinder 530 is formed in a cylindrical shape, and is configured to surround the connecting pin 430.

The insulating plate 540 is fixed to the lower surface of the upper portion 414. The insulating plate 540 is disposed on the electrode assembly 100. A through hole is formed in a portion of the insulating plate 540 located below the pressure release valve 222 and a portion of the insulating plate 540 located below the liquid injection port h.

The insulating member 500 insulating one connecting member 400 (for example, the connecting member 400 electrically connected to the positive tab 112p) of the pair of connecting members 400 and the cell case 200 may not include the upper insulating section 510 and the lateral insulating section 515. In this case, the external terminal 300 may be in direct contact with the cell case 200, or a conductive member may be disposed between the external terminal 300 and the cell case 200 instead of the upper insulating portion 510 and the lateral insulating portion 515.

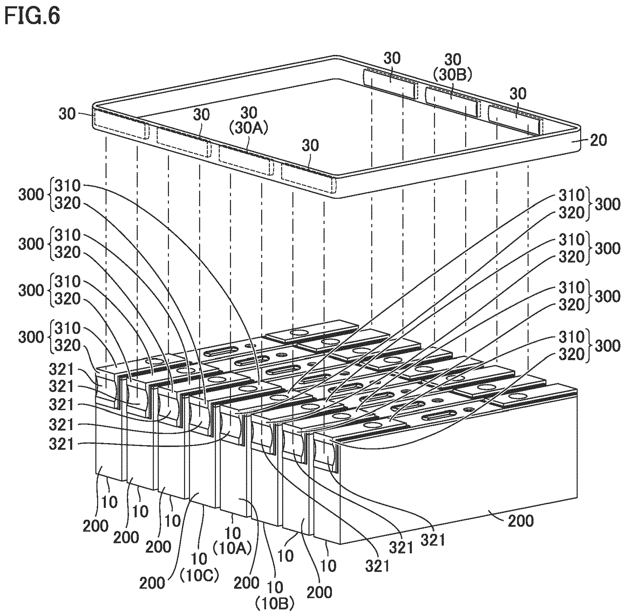

Next, the band 20 and the bus bar 30 of the power storage module 1 will be described. Fig. 6 is a perspective view schematically illustrating a step of attaching a band to a plurality of power storage cells.

As illustrated in Figs. 1, 2, 4 and 6, the band 20 is configured to surround two or more power storage cells 10. The band 20 extends in a circular shape along the lateral direction orthogonal to the vertical direction. The band 20 has a belt-like profile.

The band 20 is stretchable. The band 20 surrounds the power storage cells 10 in a stretched state. When the band 20 surrounds the power storage cells 10, the band 20 restrains two or more power storage cells 10 by a contracting force. The band 20 is configured to further stretch from the state of surrounding the power storage cells 10. The material of the band 20 is not particularly limited. The band 20 may be made of an elastic material such as silicone rubber.

In the present embodiment, the band 20 is constituted by one band member formed in a circular shape. However, the band 20 may be formed in a circular shape by connecting both ends of a belt member to each other. In other words, the band 20 may have a connection portion formed by connecting both ends to each other.

The band 20 may be constituted by two or more belt members. In this case, the band 20 may be formed in a circular shape by connecting the ends of adjacent belt members to each other. In other words, the band 20 may have two or more connection portions formed by connecting the ends of two or more belt members to each other.

In the connection portion, the belt members constituting the band 20 may be separable from each other. The length of the band 20 in the circular direction may be adjustable at the connection portion. This makes it possible to easily modify the design of the band 20 when the shape of the power storage cells 10 or the number of the power storage cells 10 is changed. The connection portion may be configured as a belt buckle which allows to adjust the length of the band 20.

The bus bar 30 (the first bus bar 30A) is disposed in the recess 321 of a first power storage cell 10A which is one of the two or more power storage cells 10 and in the recess 321 of a second power storage cell 10B which is another one of the two or more power storage cells 10 and is adjacent to the first power storage cell 10A.

The bus bar 30 is electrically conductive. Therefore, the bus bar 30 electrically connects the external terminal 300 of the first power storage cell 10A and the external terminal 300 of the second power storage cell 10B. The bus bar 30 is made of a metal such as aluminum or an aluminum alloy. The bus bar 30 may be connected to the external terminals 300 by welding or the like.

In the present embodiment, the two or more power storage cells 10 further include a third power storage cell 10C. The one or more bus bars 30 further include a second bus bar 30B different from the first bus bar 30A.

The third power storage cell 10C is disposed on one side of the first power storage cell 10A opposite to the side where the second power storage cell 10B is disposed. The third power storage cell 10C is adjacent to the first power storage cell 10A. The second bus bar 30B is disposed in the recess 321 provided on the other side surface of the first power storage cell 10A and in the recess 321 of the third power storage cell 10C.

The bus bar 30 is provided on a surface of the band 20 that faces the power storage cell 10. A portion of the bus bar 30 is embedded in the band 20.

In the present embodiment, either the first bus bar 30A or the second bus bar 30B is provided on a surface of the band 20 that faces the power storage cell 10. More specifically, all the bus bars 30 positioned on the inner peripheral side of the band 20 are provided on the surface of the band 20 that faces the power storage cell 10. These bus bars 30 are fixed on the surface of the band 20. The bus bars 30 are spaced apart from each other on the surface of the band 20.

As described above, in the power storage cell 10 according to the embodiment of the present disclosure, the second terminal portion 320 is provided with a recess 321. The recess 321 is formed on a surface of the second terminal portion 320 opposite to the other surface thereof that faces the cell case 200.

According to the above configuration, the position of the bus bar 30 with respect to the external terminal 300 may be determined by placing the bus bar 30 in the recess 321. Therefore, it is possible to easily determine the position of a component such as the bus bar for connecting the power storage cells 10 to each other.

The recess 321 extends from one end edge 322 to the other end edge 323 in the lateral direction of the second terminal portion 320 when viewed from the direction in which the second terminal portion 320 and the cell case 200 are arranged in line.

According to the above configuration, the bus bar 30 is slidable in the recess 321 in the thickness direction of the cell case 200. Therefore, it is possible to easily adjust the position of a component such as the bus bar 30 with respect to the second terminal portion 320 in the vertical direction, and it is possible to easily adjust the position of a component such as the bus bar 30 with respect to the second terminal portion 320 in the lateral direction. Therefore, it is possible to easily connect the power storage cells 10 to each other.

The power storage module 1 according to an embodiment of the present disclosure includes two or more power storage cells 10, a band 20, and a bus bar 30. The two or more power storage cells 10 are arranged side by side in the lateral direction. The band 20 surrounds two or more power storage cells 10. The bus bar 30 is disposed in the recess 321 of the first power storage cell 10A, which is one of the two or more power storage cells 10, and in the recess 321 of the second power storage cell 10B, which is another one of the two or more power storage cells 10 and is adjacent to the first power storage cell 10A. The bus bar 30 is provided on a surface of the band 20 that faces the power storage cell 10.

According to the above configuration, it is possible to reduce the height of the power storage module 1 as compared with the case where the external terminals 300 are connected to each other by the bus bar on the upper surface of the external terminal 300. Further, by attaching the band 20 to the plurality of power storage cells 10 in the vertical direction (see Fig. 6), it is possible to easily dispose the bus bar 30 in each recess 321. Therefore, it is possible to easily connect the power storage cells 10 to each other.

The band 20 is stretchable. According to this configuration, it is possible to restrain the plurality of power storage cells 10 by a contracting force of the band 20. Further, by restraining the power storage cell 10 with the band 20, it is possible to fix the bus bar 30 in the recess 321 before welding or without the need of welding the bus bar 30 to the external terminal 300. Further, by stretching the band 20, it is possible to easily detach the bus bar 30 from the recess 321. Therefore, it is possible to easily connect the power storage cells 10 to each other.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. A power storage cell comprising:
an electrode assembly (100);
a cell case (200) that houses the electrode assembly (100); and
an external terminal (300) that is fixed to the cell case (200),
wherein the external terminal (300) includes a first terminal portion (310) that is arranged above the cell case (200), and a second terminal portion (320) that extends from the first terminal portion (310) along a side surface of the cell case (200),
the second terminal portion (320) is provided with a recess (321) on a surface of the second terminal portion (320) opposite to the other surface thereof that faces the cell case (200).

2. The power storage cell according to claim 1, wherein
the recess (321) extends from one end edge (322) to the other end edge (323) in a lateral direction of the second terminal portion (320) when viewed from a direction in which the second terminal portion (320) and the cell case (200) are arranged in line.

3. A power storage module comprising:
two or more power storage cells (10) according to claim 1 or 2 that are arranged side by side in the lateral direction;
a band (20) that surrounds the two or more power storage cells (10); and
a bus bar (30) that is disposed in the recess (321) of a first power storage cell (10A) which is one of the two or more power storage cells (10) and in the recess (321) of a second power storage cell (10B) which is another one of the two or more power storage cells (10) and is adjacent to the first power storage cell (10A),
the bus bar (30) is provided on a surface of the band (20) that faces the power storage cell (10).

4. The power storage module according to claim 3, wherein the band (20) is stretchable.

## Patentansprüche

1. Energiespeicherzelle, umfassend:
eine Elektrodenanordnung (100);
ein Zellengehäuse (200), das die Elektrodenanordnung (100) unterbringt; und
einen externen Anschluss (300), der an das Zellengehäuse (200) fixiert ist,
wobei der externe Anschluss (300) einen ersten Anschlussabschnitt (310), der über dem Zellengehäuse (200) angeordnet ist, und einen zweiten Anschlussabschnitt (320) beinhaltet, der sich von dem ersten Anschlussabschnitt (310) entlang einer Seitenfläche des Zellengehäuses (200) erstreckt,
wobei der zweite Anschlussabschnitt (320) mit einer Vertiefung (321) an einer Oberfläche des zweiten Anschlussabschnitts (320) gegenüber der anderen Oberfläche davon bereitgestellt ist, die dem Zellengehäuse (200) zugewandt ist.

2. Energiespeicherzelle nach Anspruch 1, wobei
sich die Vertiefung (321) von einer Endkante (322) zu der anderen Endkante (323) in einer lateralen Richtung des zweiten Anschlussabschnitts (320) erstreckt, betrachtet von einer Richtung, in der der zweite Anschlussabschnitt (320) und das Zellengehäuse (200) in Reihe angeordnet sind.

3. Energiespeichermodul, umfassend:
zwei oder mehrere Energiespeicherzellen (10) nach Anspruch 1 oder 2, die nebeneinander in der lateralen Richtung angeordnet sind;
ein Band (20), das die zwei oder mehreren Energiespeicherzellen (10) umgibt; und
eine Sammelschiene (30), die in der Vertiefung (321) einer ersten Energiespeicherzelle (10A), die eine aus den zwei oder mehreren Energiespeicherzellen (10) ist, und in der Vertiefung (321) einer zweiten Energiespeicherzelle (10B) angeordnet ist, die eine weitere der zwei oder mehreren Energiespeicherzellen (10) ist und benachbart zu der ersten Energiespeicherzelle (10A) ist,
wobei die Sammelschiene (30) an einer Oberfläche des Bands (20) bereitgestellt ist, die der Energiespeicherzelle (10) zugewandt ist.

4. Energiespeichermodul nach Anspruch 3, wobei
das Band (20) dehnbar ist.

## Revendications

1. Cellule de stockage d'énergie électrique, comprenant :
un ensemble d'électrodes (100) ;
un boîtier de cellule (200) qui loge l'ensemble d'électrodes (100) ; et
une borne externe (300) qui est fixée au boîtier de cellule (200),
dans laquelle la borne externe (300) inclut une première partie de borne (310) qui est agencée au-dessus du boîtier de cellule (200), et une seconde partie de borne (320) qui s'étend depuis la première partie de borne (310) le long d'une surface de côté du boîtier de cellule (200),
la seconde partie de borne (320) est pourvue d'un évidement (321) sur une surface de la seconde partie de borne (320) opposée à l'autre surface de celle-ci qui fait face au boîtier de cellule (200).

2. Cellule de stockage d'énergie électrique selon la revendication 1, dans laquelle
l'évidement (321) s'étend depuis un bord terminal (322) jusqu'à l'autre bord terminal (323) dans une direction latérale de la seconde partie de borne (320) en vue depuis une direction dans laquelle la seconde partie de borne (320) et le boîtier de cellule (200) sont agencés en ligne.

3. Module de stockage d'énergie électrique, comprenant :
deux, ou plus, cellules de stockage d'énergie électrique (10) selon la revendication 1 ou 2 qui sont agencées côte-à-côte dans la direction latérale ;
une bande (20) qui entoure les deux, ou plus, cellules de stockage d'énergie électrique (10) ; et
une barre omnibus (30) qui est disposée dans l'évidement (321) d'une première cellule de stockage d'énergie électrique (10A) qui est une des deux, ou plus, cellules de stockage d'énergie électrique (10) et dans l'évidement (321) d'une seconde cellule de stockage d'énergie électrique (10B) qui est une autre des deux, ou plus, cellules de stockage d'énergie électrique (10) et est adjacente à la première cellule de stockage d'énergie électrique (10A),
la barre omnibus (30) est prévue sur une surface de la bande (20) qui fait face à la cellule de stockage d'énergie électrique (10).

4. Module de stockage d'énergie électrique selon la revendication 3, dans lequel la bande (20) est étirable.
